# EUROPÄISCHE PATENTSCHRIFT

(11) **EP 1 061 142 B1**
(45) Veröffentlichungstag und Bekanntmachung des Hinweises auf die Patenterteilung: **04.02.2004**
(21) Anmeldenummer: 00111131.9
(22) Anmeldetag: 24.05.2000
(51) Int. Cl.: C22B 7/00, C22B 11/00

(54) **Verfahren zum Lösen von bei in Kontakt mit Halogenwasserstoffsäure Wasserstoff entwickelnde Unedelmetalle aufweisenden und Edelmetalle in metallischer und/oder legierter Form aufweisenden Scheidgütern**
Method for dissolving residues containing non-noble metals generating hydrogen in contact with halohydric acids and noble metals in metallic or alloyed form
Procédé pour solubiliser des résidus contenant des métaux non nobles formant de l'hydrogène au contact des acides halogénés et des métaux nobles sous forme métallique ou alliée

(30) Priorität: 18.06.1999 DE 19927784
(43) Veröffentlichungstag der Anmeldung: 20.12.2000
(73) Patentinhaber: W.C. Heraeus GmbH & Co. KG, 63450 Hanau (DE)
(72) Erfinder: Schäfer, Dieter, 35516 Münzenberg (DE); Meyer, Horst, Dr., 63674 Altenstadt (DE); Grehl, Matthias, Dr., 60388 Frankfurt (DE)
(74) Vertreter: Kühn, Hans-Christian

(56) Entgegenhaltungen:
- EP-A- 0 176 100
- EP-A- 0 266 337
- US-A- 2 283 198
- DATABASE WPI Section Ch, Week 199739 Derwent Publications Ltd., London, GB; Class M25, AN 1997-416628 XP002147121 & CN 1 114 361 A (SHENHUA INST METAL MATERIALS SHAANXI), 3. Januar 1996 (1996-01-03)
- PATENT ABSTRACTS OF JAPAN vol. 018, no. 448 (C-1240), 22. August 1994 (1994-08-22) & JP 06 136465 A (NISSAN MOTOR CO LTD), 17. Mai 1994 (1994-05-17)

## Beschreibung

Die Erfindung betrifft ein Verfahren zum Lösen von bei in Kontakt mit Halogenwasserstoffsäure Wasserstoff entwickelnde Unedelmetalle aufweisenden und Edelmetalle in metallischer und/oder legierter Form aufweisenden Scheidgütern.

Es ist seit langem bekannt, Unedel- wie auch Edelmetalle enthaltende Scheidgüter zunächst mit Salzsäure zum Lösen der unedlen Metalle zu behandeln, um anschließend die Edelmetalle in einer Salzsäure/Chlorat-Lösung zu lösen s. zum Beispiel EP-A-0 266 237 oder CN 1 114 361 A. Nachteilig hierbei ist die Wasserstoffentwicklung, die ein hohes Verpuffungs- und somit Gefährdungspotential aufweist.

Darüber hinaus ist es bekannt, solche Scheidgüter mit Königswasser zu lösen. Auch hierbei entstehen große Mengen an mit oben genannten Nachteilen behaftetem Wasserstoff, wobei darüber hinaus mit einer hohen Umweltbelastung verbundene NOₓ-Bildung und ein energieintensives salzsaures Eindampfen als nachfolgenden Bearbeitungsschritt zur Nitratentfemung notwendig sind.

Aus dem vorgenannten ergibt sich das Problem, mit Hilfe eines neuartigen Verfahrens die oben genannten Nachteile zumindest teilweise zu beseitigen. Das sich ergebende Problem liegt insbesondere darin, ein Verfahren zum Lösen entsprechender Scheidgüter mit einer geringen Abluftbelastung, keiner Wasserstoffentwicklung und dem Wegfall des salzsauren Eindampfens bereitzustellen.

Dieses Problem wird erfindungsgemäß durch ein Verfahren nach Anspruch 1 gelöst.

Beim erfindungsgemäßen Verfahren wird in einem ersten Schritt ein bei in Kontakt mit Halogenwasserstoffsäure Wasserstoff entwickelnde Unedelmetalle aufweisendes und Edelmetalle in metallischer und/oder legierter Form aufweisendes Scheidgut in eine nicht-saure, Halogenidionen aufweisende Oxidationslösung eingetragen, deren Halogenid-Mindestkonzentration 1 mol/l und deren Temperatur + 70 °C bis + 90 °C beträgt. Hierbei ist das Oxidationsmittel halogenhaltig, wobei sich mit Halogenwasserstoffsäure im sauren eine Halogenatomverbindung, beispielsweise Chlorgas, bildet. Anschließend wird in wäßriger Lösung Halogenidionen bildende Säure unter Auflösung der Metallbestandteile zugegeben. Die Säurezugabe erfolgt derart, daß sich kein Wasserstoff bildet, somit der Reaktionsgeschwindigkeit angepaßt ist.

Anschließend wird die entstandene Lösung mittels Zugabe einer Halogenwasserstoffsäure auf eine H⁺-Mindestkonzentration von 1 mol/l eingestellt. Auf diese Art und Weise wird das Oxidationsmittel unter Bildung einer Halogenatomverbindung, insbesondere eines Halogengases, zersetzt.

Von besonderem Vorteil ist es, wenn als Oxidationsmittel Chlorat, Bromat oder Hypochlorit verwendet wird, da diese Oxidationsmittel eine rasche Auflösung der Metallbestandteile ermöglichen und die zugegebenen H⁺-Ionen rasch genug abpuffern.

Weiterhin ist es von Vorteil, wenn als Oxidationsmittel Natriumchlorat, Kaliumchlorat, Natriumbromat, Kaliumbromat, Natriumhypochlorit oder Kaliumhypochlorit verwendet wird, da sich diese Substanzen in der Praxis bewährt haben.

Das Scheidgut wird vorteilhafterweise in eine 4,5 molare Natriumchloratlösung eingetragen, da durch die Lösungszugabe zum einen eine unkontrollierte Verpuffung durch eine ausreichend hohe Wärmeableitbarkeit verhindert und zum anderen das dazugegebene Volumen durch die hohe Salzkonzentration nicht überproportional den Reaktionsansatz vergrößert.

In der Praxis hat es sich als vorteilhaft erwiesen, wenn die Temperatur der Oxidationsmittellösung + 80 °C beträgt, da die Reaktionsgeschwindigkeit groß genug ist, um die H⁺-Ionen abzufangen (Vermeidung einer H₂-Bildung) und die Metalle zu lösen, andererseits die Löslichkeit des entstehenden Chlorgases noch groß genug ist, daß dieses nicht ungenutzt entweicht.

Ferner wird in vorteilhafter Weise zur Oxidationsmittellösung festes Natriumchlorid gegeben, um während des gesamten Verfahrensablaufs eine genügend hohe Chloridionenkonzentration zur Verfügung zu stellen und auf diese Art und Weise die Gefahr einer gefährlichen Chlordioxidbildung zu minimieren. Als einziges Oxidationsprodukt entsteht neben den eigentlichen Metallionenverbindungen lediglich ein Chlorhalogen, insbesondere Chlorgas.

Das nachfolgende Beispiel dient zur Erläuterung der Erfindung:

### Einsatzmaterial

- Späne aus einer Legierung Pt/Cr/Co
- Salzsäure, konz. techn.
- Natriumchlorid, techn.
- Natriumchloratlösung, 4,5 mol/l

### Versuchungsdurchführung und Beobachtungen

Es standen 196,9 kg Pt/Cr/Co-Legierung zur Verfügung, die in Form von Spänen vorlagen. In einem Doppelmantelkessel wurden 296 I 4,5 molare Natriumchloratlösung zusammen mit 700 I Stadtwasser und 150 kg festem Natriumchlorid vorgelegt. Die Mischung wurde mit Dampf unter Rühren auf eine Temperatur von 80 °C aufgeheizt.

In der Zwischenzeit wurde ein Kunststoff-Lösekorb mit ca. 50 kg der Pt/Cr/Co-Späne beschickt und in den Reaktor eingehängt, so daß dieser in die Lösung eintauchte und die Späne mit der Lösung in Kontakt standen. Nach dem Erreichen der Lösetemperatur wurde damit begonnen, mit einer Durchflußgeschwindigkeit von ca. 0,6 l/min Salzsäure zu der Lösung zuzugeben. Der Durchfluß der Salzsäure war hierzu aus Sicherheitsgründen durch eine Lochscheibe begrenzt.

Die Späne wurden während des Lösevorgangs abgetragen. Die gelösten Späne wurden während des Lösevorgangs durch frisches Material ergänzt. Nach einer Reaktionszeit von ca. 20 h war das komplette Material in den Lösekorb eingefüllt und ca. 750 I Salzsäure zudosiert. Während des Aufschlußvorganges wurde in regelmäßigen Abständen mit einem Schöpfbecher eine Probe der Lösung entnommen und unter den Auslauf der Salzsäure gehalten. Ein deutliches Aufschäumen der Lösung durch entstehendes Chlorgas zeigte an, daß noch genügend Natriumchlorat für den Lösevorgang vorhanden war. Der Korb wurde nach der Lösezeit aus dem Reaktor entnommen, wobei dieser zu ca. 1/3 seines Inhaltes mit schwarzem, schlammartigen Löserückstand gefüllt war, der Rückstand aus dem Lösekorb in den Kessel geschaufelt und nochmals 20 I Natriumchloratlösung nachgegeben. Nun wurde über einen Zeitraum von 2 Stunden langsam Salzsäure zudosiert, um die restlichen Späne zu lösen. Die Aufschlußlösung war dunkelbraun-rötlich gefärbt.

Nun wurde weiter Salzsäure zugegeben, um die Chloratzerstörung einzuleiten. Während dieses Vorgangs entwickelte sich zunächst deutlich Chlorgas aus der Lösung bis zu einem Punkt, wo der Hauptteil des Natriumchlorates zerstört war. Der pH-Wert der Lösung sank, was mit einem sichtbaren Farbumschlag von braunrot nach dunkelgrün einherging. Ab diesem Punkt nahm gleichzeitig die Entwicklung von Chlorgas ab, so daß die Zugabegeschwindigkeit der Säure langsam und schrittweise gesteigert werden konnte.

Insgesamt wurde zur Chloratzerstörung 500 I Salzsäure innerhalb von 2 Stunden zugegeben. Im Anschluß daran wurde die Temperatur der Lösung auf 90 °C gesteigert, um das überschüssige Chlorgas aus der Lösung auszutreiben. Nach zwei Stunden bei 90 °C war keine Chlorgasemission mehr zu beobachten, so daß die Dampfheizung abgestellt werden konnte und die Lösung auf 60 °C kalt gerührt wurde. Nun wurden 20 I Absetzmittel zugegeben, der Reaktorinhalt durchmischt, das Rührwerk abgestellt und die Lösung über Nacht absitzen gelassen. Der Hauptteil der Lösung wurde abgehebert und der Rückstand über eine Saugnutsche filtriert. Der Rückstand wurde auf der Nutsche gewaschen und das Waschwasser mit der Aufschlußlösung vereinigt. Es wurden 34,7 kg feuchter Löserückstand erhalten. Die Aufschlußlösung mit einem Volumen von 2200 I wurde titrimetrisch zu 1,5 n in HCl bestimmt. Durch diese Säurenormalität ist sichergestellt, daß das Natriumchlorat vollständig zerstört wurde.

Während des Aufschlusses ist durch die gewählte Aufschlußmethode bei an die Reaktionsgeschwindigkeit angepaßter Salzsäuredosierung jederzeit gesichert, daß keine Wasserstoffentwicklung stattfinden kann. Wird die Säurezugabe unterbrochen, so wird diese durch das Natriumchlorat verbraucht und steht somit nicht mehr für eine Bildung von Wasserstoffgas zur Verfügung.

## Patentansprüche

1. Verfahren zum Lösen von bei in Kontakt mit Halogenwasserstoffsäure Wasserstoff entwikkelnde Unedelmetalle aufweisenden und Edelmetalle in metallischer und/oder legierter Form aufweisenden Scheidgütern, mit:
a) Eintragen des Scheidguts in eine nicht-saure, Halogenidionen aufweisende Oxidationsmittellösung, deren Halogenid-Mindestkonzentration 1 mol/l und deren Temperatur + 70 °C bis + 90 °C beträgt, wobei das Oxidationsmittel halogenhaltig ist und sich mit Halogenwasserstoffsäure im sauren eine Halogenatomverbindung bildet,
b) Zugabe von in wäßriger Lösung Halogenidionen bildende Säure unter Auflösung der Metall-Bestandteile, und
c) Einstellen der entstandenen Lösung mittels Zugabe einer Halogenwasserstoffsäure auf eine H⁺-Mindestkonzentration von 1 mol/l.

2. Verfahren nach Anspruch 1, **dadurch gekennzeichnet, daß** als Oxidationsmittel Chlorat, Bromat oder Hypochlorit verwendet wird.

3. Verfahren nach einem der Ansprüche 1 bis 2, **dadurch gekennzeichnet, daß** als Oxidationsmittel Natriumchlorat, Kaliumchlorat, Natriumbromat, Kaliumbromat, Natriumhypochlorit oder Kaliumhypochlorit verwendet wird.

4. Verfahren nach einem der Ansprüche 1 bis 3, **dadurch gekennzeichnet, daß** das Scheidgut in eine 4,5 molare Natriumchloratlösung eingetragen wird.

5. Verfahren nach einem der Ansprüche 1 bis 4, **dadurch gekennzeichnet, daß** die Temperatur der Oxidationsmittellösung + 80 °C beträgt.

6. Verfahren nach einem der Ansprüche 1 bis 5, **dadurch gekennzeichnet, daß** zur Oxidationsmittellösung festes Natriumchlorid zugegeben wird.

7. Verfahren nach einem der Ansprüche 1 bis 6, **dadurch gekennzeichnet, daß** zur Oxidationsmittellösung zum Auflösen der Metallbestandteile konzentrierte Salzsäure gegeben wird.

## Claims

1. Process for dissolving residues containing nonnoble metals evolving hydrogen in contact with hydrohalic acid and containing noble metals in metallic and/or alloyed form, comprising:
a) introduction of the residue into a nonacidic oxidizing agent solution which contains halide ions and the minimum halide concentration of which is 1 mol/l and the temperature of which is +70°C to +90°C, the oxidizing agent being halogen-containing and forming a halogen atom compound with hydrohalic acid in the acidic range,
b) addition of acid forming halide ions in aqueous solution, with dissolution of the metal components, and
c) adjustment of the resulting solution by means of addition of a hydrohalic acid to a minimum H⁺ concentration of 1 mol/l.

2. Process according to Claim 1, **characterized in that** the oxidizing agent used is chlorate, bromate or hypochlorite.

3. Process according to either of Claims 1 and 2, **characterized in that** the oxidizing agent used is sodium chlorate, potassium chlorate, sodium bromate, potassium bromate, sodium hypochlorite or potassium hypochlorite.

4. Process according to any of Claims 1 to 3, **characterized in that** the residue is introduced into a 4.5 molar sodium chlorate solution.

5. Process according to any of Claims 1 to 4, **characterized in that** the temperature of the oxidizing agent solution is +80°C.

6. Process according to any of Claims 1 to 5, **characterized in that** solid sodium chloride is added to the oxidizing agent solution.

7. Process according to any of Claims 1 to 6, **characterized in that** concentrated hydrochloric acid is added to the oxidizing agent solution for dissolving the metal components.

## Revendications

1. Procédé pour la dissolution de produits de séparation présentant des métaux communs se développant lors du contact de l'hydrogène avec de l'haloacide et présentant des métaux précieux sous forme métallique et/ou alliée, avec :
a) Introduction du produit de séparation dans une solution d'agent oxydant non acide présentant des ions halogénures, dont la concentration minimale en halogénures est d'l mol/l et dont la température est comprise entre + 70°C et + 90°C, l'agent oxydant étant halogéné et un composé d'atome halogène se formant en acide avec l'haloacide,
b) Addition d'acide formant des ions halogénures en solution aqueuse via séparation des composants métalliques, et
c) Ajustage de la solution obtenue au moyen de l'addition d'un haloacide avec une concentration minimale en H⁺ d'1 mol/l.

2. Procédé selon la revendication 1, **caractérisé en ce que** du chlorate, du bromate ou de l'hypochlorite est utilisé comme agent oxydant.

3. Procédé selon l'une quelconque des revendications 1 à 2, **caractérisé en ce que** du chlorate de sodium, du chlorate de potassium, du bromate de sodium, du bromate de potassium, de l'hypochlorite de sodium ou de l'hypochlorite de potassium est utilisé comme agent oxydant.

4. Procédé selon l'une quelconque des revendications 1 à 3, **caractérisé en ce que** le produit de séparation est introduit dans une solution molaire de chlorate de sodium à 4,5.

5. Procédé selon l'une quelconque des revendications 1 à 4, **caractérisé en ce que** la température de la solution d'agent oxydant s'élève à + 80°C.

6. Procédé selon l'une quelconque des revendications 1 à 5, **caractérisé en ce que** du chlorure de sodium solide est ajouté à la solution d'agent oxydant.

7. Procédé selon l'une quelconque des revendications 1 à 6, **caractérisé en ce que** de l'acide chlorhydrique concentré est ajouté à la solution d'agent oxydant pour la dissolution des composants métalliques.
